# EUROPÄISCHE PATENTANMELDUNG

(11) **EP 1 670 229 A1**
(43) Veröffentlichungstag der Anmeldung: **14.06.2006**
(21) Anmeldenummer: 04405768.5
(22) Anmeldetag: 11.12.2004
(51) Int. Cl.: H04M 15/00, H04M 15/34, H04M 17/00, G07F 7/02

(54) **Verfahren für den Betrieb eines privaten Telekommunikationssystem und privates Telekommunikationssystem**

(71) Anmelder: Transrex AG, 6023 Rothenburg (CH)
(72) Erfinder: Ganyi, Tibor, 6330 Cham (CH); Rychen, Christoph, 6274 Eschenbach (CH)
(74) Vertreter: Rutz & Partner

(57) **Zusammenfassung**

Das Verfahren ist für den Betrieb eines privaten Telekommunikationssystems vorgesehen, das eine Nebenstellenanlage (2) umfasst, an die mit einer Leseeinheit (31) versehene, mobile und/oder stationäre Endgeräte (3f, 3m) anschliessbar sind. Erfindungsgemäss dient die Leseeinheit (31) zum optischen Erfassen eines Codes (82), der mit einem Trägermaterial (81) verknüpft ist und einen Wert betreffende Daten enthält, die im zugehörigen Endgerät (3) und/oder in einem mit der Nebenstellenanlage (2) verbundenen Zentralrechner (1) registriert werden, wonach das Endgerät (3) entsprechend dem aktuell gespeicherten Wert, für die teilnehmerseitige Benutzung freigeschaltet wird. Anstelle von mit einem Chip versehenen Wertkarten werden daher kostengünstige Wertelemente (8) verwendet, die aus dem aus Papier, Karton oder Kunststoff gefertigten Trägermaterial (81) und dem darauf vorgesehenen Code (82) bestehen.

## Beschreibung

Die Erfindung betrifft ein Verfahren für den Betrieb eines privaten Telekommunikationssystems und ein privates Telekommunikationssystem mit einer Nebenstellenanlage, an die mit einer Leseeinheit versehene Endgeräte anschliessbar sind, nach dem Oberbegriff des Patentanspruchs 1 bzw. 7.

Bei Telekommunikationssystemen mit einer Nebenstellenanlage werden die Gesprächsgebühren normalerweise zentral registriert und den einzelnen Anschlüssen zugeordnet. In Hotels beispielsweise, werden die Kosten für jeden Gast erfasst und gesamthaft abgerechnet. In Krankenhäusern und Pflegeheimen kann die Abrechnung von Kommunikationsgebühren grundsätzlich in derselben Weise erfolgen. Insbesondere in Spitälern werden hingegen oft Endgeräte verwendet, die mit Lesegeräten für Telefonkarten bzw. Chipkarten ausgerüstet sind, so dass der aktuelle Teilnehmer, z.B. ein Patient, nur Gespräche führen kann, wenn er über ein entsprechend registriertes Guthaben verfügt.

Für die teilnehmerseitige Gebührenabrechnung sind dem betreffenden Endgerät Gebühreninformationen zuzuführen, wie dies in [1], EP 0 526 447 A2 und [2], DE 39 02 568 A1 beschrieben ist. Die gegebenenfalls lokal generierten Gebühreninformationen erlauben, das in der Telefonkarte registrierte Guthaben entsprechend zu reduzieren.

Nachteilig bei diesen Telekommunikationssystemen ist, dass ein relativ aufwendiges Gebührenabrechnungs- und Belastungsverfahren durchzuführen ist und dass in den Endgeräten Chipkartenleser vorzusehen sind. Unvorteilhaft ist ferner, dass Telefonkarten bzw. Chipkarten benötigt werden, die bestellt, gelagert, geladen, verkauft, rezykliert und entsorgt werden müssen.

Der vorliegenden Erfindung liegt die Aufgabe zugrunde, ein verbessertes Verfahren für den Betrieb eines privaten Telekommunikationssystems und ein für die Anwendung dieses Verfahrens geeignetes privates Telekommunikationssystem anzugeben, das mit einer Nebenstellenanlage versehen ist. Insbesondere soll das erfindungsgemässe Verfahren erlauben, die Nutzung des Telekommunikationssystems, insbesondere die Gebührenzahlung und die Gebührenabrechnung, zu vereinfachen, sowie den dafür benötigten administrativen Aufwand zu verringern. Ferner soll das erfindungsgemässe Telekommunikationssystem mit kostengünstigeren Endgeräten bestückbar sein, die einen reduzierten Wartungsaufwand verursachen.

Diese Aufgabe wird mit einem Verfahren und einem Telekommunikationssystem gelöst, welche die in Anspruch 1 bzw. 7 angegebenen Merkmale aufweisen. Vorteilhafte Ausgestaltungen der Erfindung sind in weiteren Ansprüchen angegeben.

Das Verfahren ist für den Betrieb eines privaten Telekommunikationssystems vorgesehen, das eine Nebenstellenanlage (Privat Branch Exchange (PBX/PABX)) umfasst, an die mit einer Leseeinheit versehene, mobile und/oder stationäre Endgeräte angeschlossen sind.

Erfindungsgemäss dient die Leseeinheit dem optischen Erfassen eines auf ein Trägermaterial gedruckten Codes, der einen Wert betreffende Daten enthält, die nach dem Lesevorgang im zugehörigen Endgerät und/oder in einem mit der Nebenstellenanlage verbundenen Zentralrechner registriert werden, wonach das Endgerät entsprechend dem aktuell gespeicherten Wert, für die teilnehmerseitige Benutzung freigeschaltet wird.

Der Code ist vorzugsweise ein auf Papier, oder andere Materialien wie Karton oder Kunststoff, gedruckter Strichcode (Bar Code), wodurch anstelle einer mit einem Chip bestückten Wertkarte ein Wertelement gebildet wird. Die dadurch resultierenden Vorteile sind vielfältig.

Einerseits werden keine mit integrierten Schaltungen (Chips) bestückten, relativ teuren Telefonkarten und somit auch keine teuren und wartungsintensiven Lesevorrichtungen benötigt, die zudem viel Platz in Anspruch nehmen und, sofern sie in die Endgeräte integriert sind, besondere Gehäuseformen erfordern.

Ferner resultiert durch Anwendung der erfindungsgemässen Lösung eine einfachere Bewirtschaftung des privaten Telekommunikationssystems. Die Wertelemente können vom Betreiber des Telekommunikationssystems mit minimalem Aufwand selbst produziert und verwaltet werden. Wertelemente können bei Bedarf in beliebiger Stückzahl und in beliebiger Ausgestaltung produziert werden, so dass das Telekommunikationssystem durch den Anwender autonom betrieben werden kann. Nach Verwendung des in Papierform vorliegenden Wertelements kann dieses mit geringem Aufwand durch den Teilnehmer entsorgt werden.

Vorzugsweise werden die bearbeiteten Codes vom Zentralrechner in die Kategorien freie Codes, ausgegebene Codes und benutzte Codes unterteilt. Der Zentralrechner hat daher stets die Kontrolle über alle Codes und somit über die gesamten Gesprächsguthaben der Teilnehmer. Die freien Codes können vom Zentralrechner ausgegeben und die benutzten Codes können gesperrt und nach Ablauf eines Verfalldatums rezykliert werden, damit die Codelänge eng begrenzt werden kann. Die Überwachung der Codes erlaubt daher, die Wertelemente nach einmaligem Gebrauch zu entwerten. Somit ist es nicht möglich ein Wertelement gegebenenfalls zu kopieren und mehrfach zu gebrauchen.

Sofern auf dem Wertelement zusätzlich Betriebsparameter und/oder Berechtigungen vorgesehen sind, können die Endgeräte automatisch anwenderspezifisch eingestellt werden, ohne dass dafür Personal benötigt wird. Die Wertelemente können bei Bedarf daher mit Teilnehmer-spezifischen Daten versehen werden. Grundsätzlich können in diesem Fall die Werte auch zentral gespeichert werden. In diesem Fall muss dem Zentralrechner jedoch gemeldet werden, für welches Endgerät die Werte zu registrieren sind oder es muss dem Teilnehmer ein entsprechender Zugangscode zugeteilt werden.

Der Code kann dabei beliebige Teilnehmer-spezifische, Endgeräte-spezifische, verwaltungsspezifische, und sicherheitsspezifische Elemente aufweisen. Beispielsweise können Codes ausgegeben werden, die an Teilnehmer oder Teilnehmergruppen gebunden oder die nur für bestimmte Endgeräte verwendbar sind. Ferner kann in den Codes das Ausgabedatum, eine Laufzeit oder ein Verfalldatum enthalten sein. Ferner kann anhand der Codes gleichzeitig der Betriebsmodus der Endgeräte eingestellt werden. Vorzugsweise werden farbige Wertelemente ausgegeben. Beispielsweise wird Kindern ein rotes und Erwachsenen ein blaues Wertelement abgegeben. Die Wahl von Farben erleichtert die Gruppierung und Zuordnung der Wertelemente zu den gruppierten Anwendern bzw. Teilnehmern, zu den gruppierten Endgeräten oder zu gruppierten Lokalitäten. Sofern die Leseeinheiten über einen farbempfindlichen Sensor verfügen, kann die Farbe des Wertelements als zusätzliche Information gelesen werden. Vorteilhaft bei der Verwendung von Farben ist insbesondere auch, dass die direkte Kontrolle der korrekten Zuweisung eines Wertelements an einen Teilnehmer einer Gruppe und somit die indirekte Kontrolle und Steuerung der Endgeräte leicht möglich ist.

Die Verwendung von Farben verhindert ferner das einfache Fälschen von Wertelementen. Kopien von Wertelementen sind aufgrund des unterschiedlichen Trägermaterials leicht identifizierbar. Möglich ist ferner die Verwendung von Leseeinheiten, welche die Wertelemente beidseitig optisch abtasten. Möglich ist weiterhin die Verwendung von gelochten Wertelementen, die kaum kopierbar sind. Beispielsweise kann ein Sicherheitscode in das Wertelement eingelocht, beispielsweise eingestanzt werden, an den der gedruckte Code anschliesst. Sofern der gelochte Code nicht korrekt gelesen wird, kann das Endgerät abgeschaltet oder ein Alarm ausgelöst werden. Damit die Verwaltung Wertelemente mit teilweise gelochten Codes mit handelsüblichen Druckern ausgeben kann, werden vorzugsweise mit gelochten Codeelementen versehene Trägermaterialien verwendet, die von einer Grossdruckerei kostengünstig bezogen werden können.

Auf einem roten Wertelement sind beispielsweise ein Wert und Berechtigungen gespeichert, die die Nutzung eines Multimedia-Endgeräts erlauben, mittels dessen Kommunikationsverbindungen erstellt und Filme von zentral verwalteten Datenträgern herunter geladen werden können. Der für Kinder vorgesehene Code kann nun die Klasse der Filme definieren, die herunter geladen werden dürfen sowie die Abspielzeiten (beispielsweise bis 21.00). Beispielsweise kann das Endgerät mittels des eingegebenen Codes auch programmiert werden, so dass die Lautstärke, die Bildeinstellungen, und/oder die Audioausgänge gegebenenfalls in Abhängigkeit der Tageszeit eingestellt oder geschaltet werden. Besonders wichtig ist die Teilnehmer-spezifische Steuerung der Informationsmenüs, die mit der erfindungsgemässen Lösung vorteilhaft realisierbar ist. Für Kinder kann automatisch das entsprechende Kinderprogramm oder der Zugang zu Lernsoftware auf dem Bildschirm angezeigt werden.

Vorteilhaft bei der Verwendung von Farben ist insbesondere auch, dass die direkte Kontrolle der korrekten Zuweisung eines Wertelements an einen Teilnehmer einer Gruppe und somit die indirekte Kontrolle der Endgeräte leicht möglich ist, ohne dass Interventionen des Personals erforderlich sind. Auf den Wertelementen können ferner Informationen über die Bedienung der Endgeräte und die zur Verfügung stehenden Produkte für den Teilnehmer lesbar aufgedruckt sein. Auf einem an einer Kasse einer Kantine einlösbaren Wertelement, das an das Personal, an Gäste oder Patienten abgegeben wird, kann beispielsweise das Tagesmenü abgedruckt sein. Ferner können Kommunikationsgebühren oder Konsumationskosten für Dienstleistungen aufgelistet sein.

In weiteren vorzugsweisen Ausgestaltungen des privaten Telekommunikationssystems kann der Teilnehmer weitere Endgeräte, die der Lieferung von Produkten, Dienstleistungen und/oder Waren, dienen, bedienen, wobei entsprechende Konsumationen seinem Konto belastet werden oder mittels Eingabe eines Wertelements kompensiert werden.

Das erfindungsgemässe private Telekommunikationssystem ist daher hinsichtlich der konsumierbaren Produkte nicht beschränkt und den Bedürfnissen des Betreibers und der Anwender bzw. Teilnehmer flexibel anpassbar. Die Wertelemente sind universell, ein- oder mehrfach, einsetzbar.

Die Wertelemente werden vorzugsweise aus Papier, Karton oder Kunststoff gefertigt. Die Verwendung von hochwertigen Trägermaterialien wird vorzugsweise in Fällen vorgesehen, in denen ein mehrfacher Gebrauch der Wertelemente vorgesehen ist. Sofern auf einem Wertelement beispielsweise eine für längere Zeit gültige Berechtigung und/oder die Identität des Anwenders aufgebracht sind, kann das Wertelement vorzugsweise mehrfach verwendet werden.

Die Leseeinheiten können mit minimalen Kosten in die Endgeräte, vorzugsweise in die mobilen Elemente integriert werden, die somit die Leseeinheit bilden.

Nachfolgend wird die Erfindung anhand von Zeichnungen näher erläutert. Dabei zeigt:
- Figur 1: in einer vorzugsweisen Ausgestaltung den Aufbau eines erfindungsgemässen privaten Telekommunikationssystems, das Teilnehmern verschiedene Produkte, Dienstleistungen und Waren, zur Verfügung stellt, die mittels erfindungsgemässen Wertelementen 8 an mit einer Leseeinheit 31 versehenen mobilen und stationären Endgeräten 3f, 3m, 3x bezogen werden können;
- Figur 2: das erfindungsgemässe Wertelement 8, versehen mit einem gedruckten Streifencode;
- Figur 3: das Wertelement 8 von Figur 2, versehen mit einem Code 82 der aus gedruckten und gelochten Streifen besteht; und
- Figur 4: ein für die Verwendung der Wertelemente 8 geeignetes Multimedia-Endgerät 3, das ein Mobilteil 34 mit einer darin integrierten Leseinheit 31 aufweist.

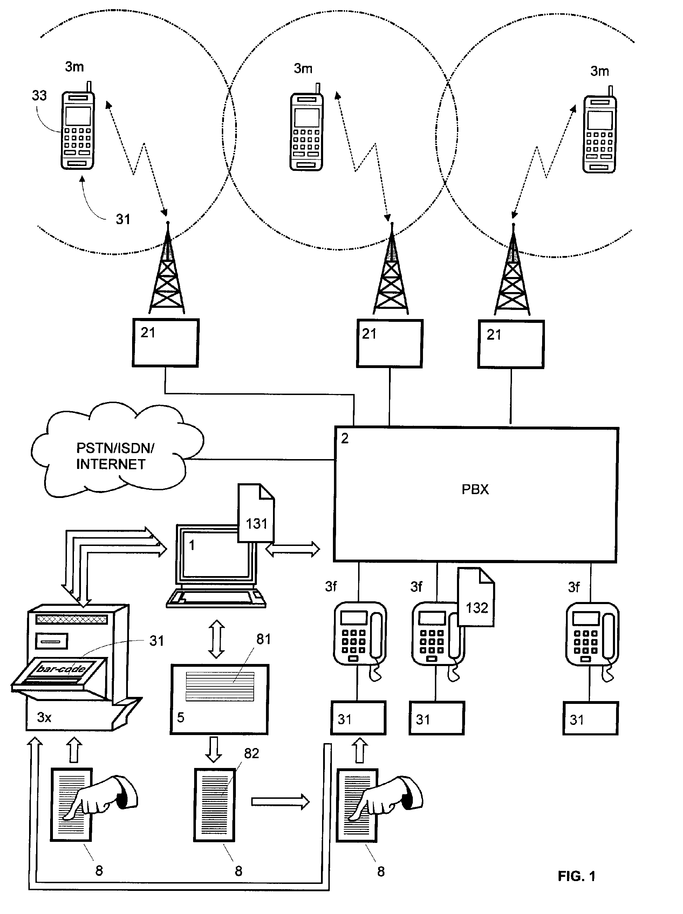

Figur 1 zeigt in einer vorzugsweisen Ausgestaltung den Aufbau eines erfindungsgemässen privaten Telekommunikationssystems, das eine mit einem öffentlichen Kommunikationsnetz PSTN/ISDN verbundene Nebenstellenanlage 2 aufweist, an die drahtgebundene Endgeräte 3f und über Basisstationen 21 mobile Endgeräte 3m anschliessbar sind. Der Aufbau und die Funktion einer solchen Anlage sind in [3], EP 1 345 462 A1 beschrieben.

Verfahren zur teilnehmerseitigen Erfassung der aufgelaufenen Gesprächsgebühren sind in [1] und [2] beschrieben.

Für die teilnehmerseitige Gebührenabrechnung sind dem betreffenden Endgerät Gebühreninformationen zuzuführen, wie dies in [1], EP 0 526 447 A2 und [2], DE 39 02 568 A1 beschrieben ist. Mittels der Gebühreninformationen wird sodann das in der Telefonkarte registrierte Guthaben reduziert.

Die Steuerung und die zentrale Verwaltung des privaten Telekommunikationssystems erfolgt mittels eines Zentralrechners 1, der mit der Nebenstellenanlage 2 verbunden ist und der vorzugsweise zur zentralen Erfassung der Gebühren und zur Verwaltung von Teilnehmerkonten geeignet ist.

Da Nebenstellenanlagen 2 bekanntlich leistungsfähige Rechner aufweisen, kann die Nebenstellenanlage 2 auch vorteilhaft in den Zentralrechner 1 integriert sein. Die Nebenstellenanlage 2 bildet in diesem Fall ein Kommunikationsmodul des Zentralrechners 1 der über TCP/IP-Verbindungen direkt mit den Endgeräten 3 verbunden sein kann, um betriebsinterne Daten mit den Endgeräten 3 auszutauschen oder diese über die Nebenstellenanlage 2 mit dem öffentlichen Kommunikationsnetz PSTN/ISDN oder anhand von Voice-over-IP Protokollen mit dem Internet zu verbinden. Eine Kommunikationsvorrichtung dieser Art ist aus [4], EP 1 413 969 A2 bekannt. Die nachfolgend beschriebenen erfindungsgemässen Lösungen sind bei diesen bekannten Vorrichtungen vorteilhaft anwendbar. Bei der in [4] beschriebenen Vorrichtung wird erfindungsgemäss auf die dortige Verwendung von Chip-Karten verzichtet.

Die in Figur 1 gezeigten Endgeräte 3f, 3m sind mit einer Leseeinheit 31 versehen, die zum optischen Erfassen eines Codes 82 geeignet ist, der mit einem vorzugsweise flächigen Trägermaterial 81 verknüpft ist. Die Leseeinheit 31 ist vorzugsweise in das Gehäuse 33 der Endgeräte 3f, 3m, vorzugsweise in deren Mobilteil 34, integriert. Möglich ist natürlich auch die Verwendung einer separaten Leseeinheit 31 (siehe [5], DE 38 20 808 A1 und [6], CA 2 304 887 A1).

Der Code 82 umfasst einen Wert betreffende Daten, die nach dem Lesevorgang im zugehörigen Endgerät 3 und/oder im Zentralrechner 1 registrierbar sind. Nach dem Lesen des Codes 82 und der Registrierung der entsprechenden Daten, wird das Endgerät 3 entsprechend dem aktuell gespeicherten Wert, für die teilnehmerseitige Benutzung gegebenenfalls in einer durch den Code 82 definierten Konfiguration freigeschaltet.

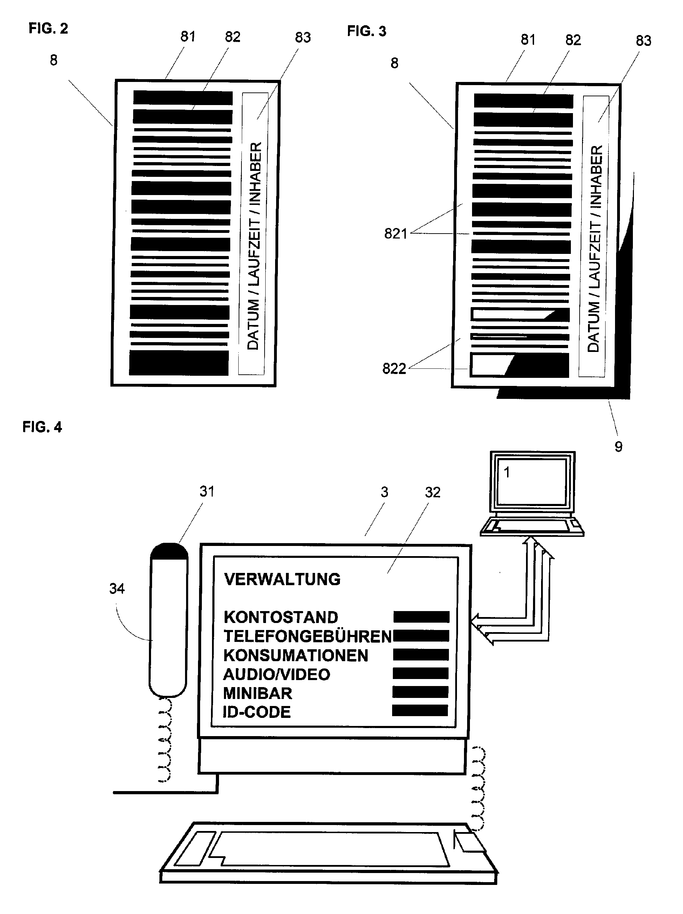

Wie in den Figuren 1, 2 und 3 gezeigt, wird vorzugsweise ein Strichcode verwendet, der auf das Trägermaterial 81 aufgedruckt und/oder in das Trägermaterial 81 eingelocht wird. Das Trägermaterial 81 besteht beispielsweise aus Karton, Kunststoff oder Papier und kann eine bestimmte Farbe und/oder einen bereits gelochten Sicherheitscode 822 aufweisen. Der Code 82 wird daher durch gelochte und/oder gedruckte Codeelemente 821, 822 gebildet. Die mit den Codes 82 versehenen Trägermaterialien 81 bilden daher Wertelemente 8, die den Leseeinheiten 31 der Endgeräte 3f, 3m, 3x zuführbar sind. Figur 2 zeigt ein Wertelement 8 mit einem vollständig gedruckten Code 82. Figur 3 zeigt ein Wertelement 8 mit einem Code 82, der gedruckte und gelochte Codeelemente 821, 822 aufweist. Das Wertelement 8 ist auf eine schwarze Unterlage 9 abgelegt, welche die gelochten Elemente 822 optisch ausfüllt, so dass die Codes 82 der in Figur 2 und Figur 3 gezeigten Wertelemente 8 in gleicher Weise gelesen werden können. In den Figuren 2 und 3 ist weiter gezeigt, dass auf dem Wertelement ein Textfeld 83 vorgesehen ist, das für den Anwender bzw. Teilnehmer bestimmte Informationen enthält.

Bei dem in Figur 1 gezeigten privaten Telekommunikationssystem ist der Zentralrechner 1 zusätzlich mit einem oder mehreren weiteren Endgeräten 3x verbunden, durch die der Inhaber von Wertelementen 8 Produkte, Dienstleistungen oder Waren, beziehen kann. Diese weiteren Endgeräte 3x können ebenfalls mit Leseeinheiten 31 versehen sein oder für den vorzugsweise Passwort-geschützten Zugriff auf das vom Zentralrechner 1 verwaltete Konto des Teilnehmers geeignet sein. Der Teilnehmer kann daher sein Konto über ein Kommunikationsendgerät 3f, 3m laden und über ein Konsumationsendgerät 3x entladen.

Für die Durchführung des erfindungsgemässen Verfahrens sind der Zentralrechner 1 und die Endgeräte 3 mit entsprechenden Softwareprodukten 131; 132 bestückt.

Die Ausgabe der Wertelemente 8 erfolgt an wenigstens einer Ausgabestelle mittels eines Druckers 5, durch den die gegebenenfalls bereits mit gelochten Codeelementen 822 versehenen Trägermaterialien 81 mit Codeelementen 821 bedruckt werden.

Die bevorzugten Arten der Verwaltung der ausgegebenen Codes 82 wurden bereits oben beschrieben. Ziel der verwaltungsmassnahmen ist es, den Anwendern bzw. Teilnehmern und dem Personal eine einfache und flexible Nutzung des privaten Telekommunikationssystems zu erlauben und gleichzeitig, den Missbrauch des privaten Telekommunikationssystem mit einfachen Massnahmen zu verhindern. Missbräuche können vorteilhaft durch die Wahl und Kennzeichnung der Trägermaterialien und durch die Überwachung und Sperrung von ausgegebenen und genutzten Codes 82 und/oder durch die Einführung und Überwachung von Verfallsdaten vermieden werden.

Nebst dem Wert kann der Code 82 Berechtigungen und Betriebsparameter enthalten, mittels derer die Endgeräte 3 freigeschaltet und konfiguriert werden.

Figur 4 zeigt ein für die Verwendung der Wertelemente 8 geeignetes Multimedia-Endgerät 3, das ein Mobilteil 34 mit einer darin integrierten Leseinheit 31 aufweist. In vorzugsweisen Ausgestaltungen ist es möglich, auf dem Bildschirm 32 des Multimedia-Endgeräts 3 den aktuellen Kontostand und die konsumierten Produkte anzuzeigen. Das Multimedia-Endgerät 3 ist beispielsweise über eine ADSL- oder VDSL-Verbindung mit dem Zentralrechner 1 verbunden (siehe [4]).

Literaturverzeichnis
[1] EP 0 526 447 A2
[2] DE 39 02 568 A1
[3] EP 1 345 462 A1
[4] EP 1 413 969 A2
[5] DE 38 20 808 A1
[6] CA 2 304 887 A1

## Patentansprüche

1. Verfahren für den Betrieb eines privaten Telekommunikationssystems, das eine Nebenstellenanlage (2) umfasst, an die mit einer Leseeinheit (31) versehene, mobile und/oder stationäre Endgeräte (3f, 3m) anschliessbar sind, **dadurch gekennzeichnet, dass** die Leseeinheit (31) zum optischen Erfassen eines Codes (82) geeignet ist, der mit einem Trägermaterial (81) verknüpft ist und einen Wert betreffende Daten enthält, die im zugehörigen Endgerät (3) und/oder in einem mit der Nebenstellenanlage (2) verbundenen Zentralrechner (1) registriert werden, wonach das Endgerät (3) entsprechend dem aktuell gespeicherten Wert, für die teilnehmerseitige Benutzung freigeschaltet wird.

2. Verfahren nach Anspruch 1, **dadurch gekennzeichnet, dass** der Code (82) ein Strichcode ist und/oder dass das unbedruckte und gegebenenfalls bereits mit gelochten Codeelementen (822) versehene Trägermaterial (81) Karton, Kunststoff oder Papier, gegebenenfalls mit einer wählbaren Farbe, ist, und dass das mit dem Code (82) versehene und dazu gelochte und/oder bedruckte Trägermaterial (81) ein Wertelement (8) ist.

3. Verfahren nach Anspruch 1 oder 2, **dadurch gekennzeichnet, dass** die Codes (82) vom Zentralrechner (1) verwaltet und in die Kategorien freie Codes, ausgegebene Codes und benutzte Codes unterteilt werden, wobei freie Codes für die Nutzung gesperrt und für die Ausgabe bereitgestellt werden und/oder ausgegebene Codes für die Nutzung frei geschaltet werden und/oder benutzte Codes nach der einoder mehrmaligen Eingabe gesperrt und gegebenenfalls in freie Codes gewandelt werden.

4. Verfahren nach Anspruch 1, 2 oder 3, **dadurch gekennzeichnet, dass** die Wertelemente (8) vom Zentralrechner (1) mittels eines Druckers (5) ausgegeben werden.

5. Verfahren nach Anspruch 1, 2, 3 oder 4, **dadurch gekennzeichnet, dass** die eingegebenen Werte dem Konto des betreffenden Teilnehmers lokal oder zentral gutgeschrieben und/oder individuell einem Endgerät (3) zugeordnet werden, wobei das Konto frei zugänglich oder mittels eines Passworts geschützt ist.

6. Verfahren nach Anspruch 5, **dadurch gekennzeichnet, dass** der Teilnehmer weitere Endgeräte (3x), die der Lieferung von Dienstleistungen und/oder Produkten dienen, bedienen kann, wobei entsprechende Konsumationen seinem Konto belastet werden und/oder
dass das Wertelement (8) einem weiteren, mit einer Leseeinheit (31) versehenen Endgerät (3x) zugeführt und der darauf vorgesehene Code (82) von diesem gelesen wird, wonach die einen Wert betreffenden Daten im zugehörigen Endgerät (3) und/oder im Zentralrechner (1) als Zahlungseingang für den Bezug von Produkten oder als Gutschrift für das Konto des betreffenden Teilnehmers registriert werden.

7. Privates Telekommunikationssystem, das eine Nebenstellenanlage (2) umfasst, an die ein Zentralrechner (1) und mit einer Leseeinheit (31) versehene, mobile und/oder stationäre Endgeräte (3f, 3m) angeschlossen sind, wobei wenigstens im Zentralrechner (1) und in den Endgeräten (3f, 3m) Softwareprodukte (131, 132) installiert sind, die zur Durchführung des Verfahrens nach einem der Ansprüche 1 - 6 geeignet sind.

8. Privates Telekommunikationssystem nach Anspruch 7,
**dadurch gekennzeichnet, dass** der Code (82) ein Strichcode ist und/oder dass das unbedruckte und gegebenenfalls bereits mit gelochten Codeelementen (822) versehene Trägermaterial (81) Karton, Kunststoff oder Papier, gegebenenfalls mit einer wählbaren Farbe ist, und dass das mit dem Code (82) versehene und dazu gelochte und/oder bedruckte Trägermaterial (81) ein Wertelement (8) ist.

9. Privates Telekommunikationssystem nach Anspruch 7 oder 8, **dadurch gekennzeichnet, dass** die Leseeinheit (31) in das Gehäuse (33) der Endgeräte (3f, 3m) oder in deren Mobilteil (34) integriert sind.

10. Privates Telekommunikationssystem nach Anspruch 7, 8 oder 9, **dadurch gekennzeichnet, dass** wenigstens ein weiteres, gegebenenfalls mit einer Leseeinheit (31) versehenes Endgerät (3x) vorgesehen ist, das der Lieferung von Produkten, Dienstleistungen und/oder Waren, dient, vorgesehen ist, welches das Lesen der Wertelemente (8) erlaubt und/oder welches mit dem Zentralrechner (1) verbunden ist, so dass der dem Teilnehmer zugeordnete Kontostand im weiteren Endgerät (3x) oder im Zentralrechner (1) bei einer Konsumation oder beim Lesen der Wertelemente (8) entsprechend geändert werden kann.
